# EUROPÄISCHE PATENTANMELDUNG

(11) **EP 4 269 771 A1**
(43) Veröffentlichungstag der Anmeldung: **01.11.2023**
(21) Anmeldenummer: 23000063.0
(22) Anmeldetag: 17.04.2023
(51) Int. Cl.: F02D 9/04, F02D 41/00, F02D 41/14, F02B 37/18

(54) **BRENNKRAFTMASCHINE UND VERFAHREN ZUR SIMULTANEN REGELUNG DER ABGASTEMPERATUR UND DES LADEDRUCKS EINER BRENNKRAFTMASCHINE**

(30) Priorität: 27.04.2022 DE 102022001473
(71) Anmelder: DEUTZ Aktiengesellschaft, 51149 Köln (DE)
(72) Erfinder: Thiel, Michael, Köln (DE)

(57) **Zusammenfassung**

Eine Brennkraftmaschine umfassend: einen Abgasturbolader (17) mit einer Turbine (19), die in einem Abgaskanal (8) angeordnet ist, und mit einem Verdichter (18), der in einem Saugkanal (4) angeordnet ist; ein Bypass-Ventil (13), über das zumindest ein Teil eines Abgasmassenstroms der Brennkraftmaschine an der Turbine (19) vorbeiführbar ist, und eine Abgasklappe (15), die stromabwärts von der Turbine (19) und dem Bypass-Ventil (13) in dem Abgaskanal (8) angeordnet ist.

## Beschreibung

Die vorliegende Erfindung betrifft eine Brennkraftmaschine und ein Verfahren zur simultanen Regelung der Abgastemperatur und des Ladedrucks einer Brennkraftmaschine.

Brennkraftmaschinen, insbesondere Dieselmotoren, stoßen gesundheitsschädliche Abgase, insbesondere Stickoxide und Rußpartikel aus. Weltweit wurden in den letzten Jahren die Grenzwerte für die maximal zulässige Emission verschärft. Brennkraftmaschinen umfassen daher regelmäßig Abgasnachbehandlungsanordnungen, um die Emissionen der Brennkraftmaschine zu reduzieren. Die Abgasnachbehandlungsanordnungen können dabei insbesondere einen Partikelfilter zur Beseitigung von Rußpartikeln und einen SCR-Katalysator (SCR, engl.: Selective Catalytic Reduction) zur Eliminierung von Stickoxiden umfassen.

Sowohl Partikelfilter als auch SCR-Katalysatoren erfordern für deren Funktionalität eine bestimmte Betriebstemperatur. Die Temperatur der genannten Komponenten wird maßgeblich über die Temperatur des vom Motor zugeführten Abgases bestimmt.

Aus DE 10 2005 004 880 B4 ist ein Verfahren zur Abgastemperaturregelung für eine Brennkraftmaschine bekannt, wobei bei Überschreitung einer vorgegebenen Maximal-Abgastemperatur im Gemisch das Verbrennungsluftverhältnis bis zu einem unteren Grenzwert stetig oder in mehreren Schritten abgesenkt und bei Erreichen dieses Grenzwertes die Zylinderfüllung stetig oder in mehreren Schritten reduziert wird.

Hiervon ausgehend liegt der vorliegenden Erfindung die Aufgabe zugrunde, eine Brennkraftmaschine bereitzustellen, die eine schnelle Regelung der Abgastemperatur bei gleichzeitiger Minimierung von Wirkungsgradverlusten der Brennkraftmaschine ermöglicht. Eine weitere Aufgabe, die der vorliegenden Erfindung zugrunde liegt, besteht darin, ein Verfahren zur simultanen Regelung der Abgastemperatur und des Ladedrucks einer Brennkraftmaschine bereitzustellen, das eine schnelle Regelung bei einem hohen Wirkungsgrad der Brennkraftmaschine ermöglicht.

Zur Lösung der Aufgabe wird eine Brennkraftmaschine vorgeschlagen, umfassend: einen Abgasturbolader mit einer Turbine, die in einem Abgaskanal angeordnet ist, und mit einem Verdichter, der in einem Saugkanal angeordnet ist; ein Bypass-Ventil, über das zumindest ein Teil des Abgases der Brennkraftmaschine an der Turbine vorbeiführbar ist, und eine Abgasklappe, die stromabwärts von der Turbine und dem Bypass-Ventil in dem Abgaskanal angeordnet ist.

Die Brennkraftmaschine umfasst in dem Abgaskanal zwei Aktuatoren, welche zur Regelung der Abgastemperatur verwendet werden können. Der erste Aktuator ist die Abgasklappe. Durch Schließen der Abgasklappe wird ein Strömungswiderstand des durch den Abgaskanal strömenden Abgases erzeugt, sodass der Abgasgegendruck erhöht wird. Als Folge verringert sich die Leistung des Verdichters des Abgasturboladers, was zu einem Absinken des Abgasvolumenstroms führt. Dies wiederum führt zu einem verminderten Ladedruck, der in dem Saugkanal bereitgestellt wird. Durch den verminderten Ladedruck wird die Brennkraftmaschine von weniger Frischluft durchströmt. Die Energie des in den Brennkammern der Brennkraftmaschine verbrannten Kraftstoffes verteilt sich daher auf weniger Gas, sodass das Abgas eine höhere Temperatur erreicht. Zudem steigt beim Schließen der Abgasklappe der Abgasgegendruck unmittelbar hinter den Brennkammern der Brennkraftmaschine im Abgaskanal an. Das Schließen der Abgasklappe führt somit zu einem fallenden Ladedruck in Kombination mit einem steigenden Abgasgegendruck, sodass Ladungswechselverluste der Brennkraftmaschine ansteigen und der Wirkungsgrad der Brennkraftmaschine fällt. Mit der Abgasklappe alleine kann somit eine Regelung der Abgastemperatur erzielt werden, wobei wesentliche Wirkungsgradverluste mit dem Schließen der Abgasklappe einhergehen.

Der zweite Aktuator ist das Bypass-Ventil, über das primär der von dem Verdichter in den Saugkanal bereitgestellte Ladedruck regelbar ist. Durch Öffnen des Bypass-Ventils kann der Anteil des Abgases, der an der Turbine das Abgasturbolader vorbeiströmt, erhöht werden, sodass die Verdichterleistung reduziert wird, was zu einem verminderten Ladedruck führt, was wiederum zu einem Anstieg der Abgastemperatur führt, wie oben gezeigt. Das Schließen des Bypass-Ventils hat den gegenteiligen Effekt.

Die erfindungsgemäße Brennkraftmaschine weist den Vorteil auf, dass eine Soll-Abgastemperatur primär über das Bypass-Ventil bis zu einem variablen Grenzwert der Abgastemperatur geregelt werden kann, ohne dabei wesentliche Wirkungsgradverluste der Brennkraftmaschine in Kauf nehmen zu müssen. Erst nachfolgend, wenn die Soll-Abgastemperatur oberhalb des von dem Bypass-Ventil einregelbaren variablen Grenzwertes der Abgastemperatur liegt, kann die Abgasklappe zusätzlich für die Regelung der Abgastemperatur verwendet werden, unter Inkaufnahme von Wirkungsgradverlusten der Brennkraftmaschine.

In einer möglichen Ausführungsform kann die Brennkraftmaschine als Diesel-Brennkraftmaschinen ausgestaltet sein.

In einer möglichen Ausführungsform der Brennkraftmaschine kann der Abgaskanal eine Abgasnachbehandlungsanordnung umfassen. Die Abgasnachbehandlungsanordnung kann insbesondere alle bekannten Abgasreinigungssysteme umfassen. Die Abgasreinigungssysteme können insbesondere auf chemischen Prozessen beruhen. Beispielweise kann die Abgasnachbehandlungsanordnung einen Partikelfilter und/oder und einen Katalysator, der auf selektiver katalytischen Reduktion des Abgases beruht (SCR-Katalysator), umfassen.

In einer weiteren möglichen Ausführungsform der Brennkraftmaschine können der Saugkanal und der Abgaskanal nur über die Brennkammern der Brennkraftmaschine fluidisch miteinander verbunden sein. In diesem Fall weist die Brennkraftmaschinen beispielweise keine Abgasrückführung auf.

Zur Lösung der Aufgabe wird ferner ein Verfahren zur simultanen Regelung der Abgastemperatur und des Ladedrucks einer Brennkraftmaschine, insbesondere einer Brennkraftmaschinen nach einer vorhergehend beschriebenen Art, vorgeschlagen, die folgenden Schritte umfassend: Ermitteln eines Ist-Ladedrucks; Ermitteln einer Ist-Abgastemperatur; Bestimmen eines Soll-Ladedrucks; Bestimmen eines Soll-Abgastemperatur-Bereichs; simultanes Bestimmen einer Stellgröße eines Bypass-Ventils, über das zumindest ein Teil des Abgasmassenstroms der Brennkraftmaschine an einer Turbine eines Abgasturboladers vorbeiführbar ist, und einer Stellgröße einer Abgasklappe mittels eines nicht-linearen modelprädiktiven Reglers in Abhängigkeit des Ist-Ladedrucks, der Ist-Abgastemperatur, des Soll-Ladedrucks und des Soll-Abgastemperatur-Bereichs; und Einstellen der Stellgröße des Bypass-Ventils und der Stellgröße der Abgasklappe.

Neben der Abgastemperatur, die im Wesentlichen für die Funktionsfähigkeit das Abgasnachbehandlungssystems geregelt wird, ist der Ladedruck eine weitere Regelgröße, die im Wesentlichen zur Wirkungsgradoptimierung der Brennkraftmaschine geregelt wird.

Wie zuvor gezeigt, beeinflussen sowohl das Bypass-Ventil als auch die Abgasklappe die Regelgrößen Abgastemperatur und Ladedruck gleichzeitig. Es handelt sich somit um ein gekoppeltes Mehrgrößensystem. Es ist entsprechend nicht möglich eine der Regelgrößen zu regeln, ohne gleichzeitig die andere der beiden Regelgrößen ebenfalls zu verändern, sodass sich die beiden Regelgrößen mehrheitlich in einem Zielkonflikt befinden.

Das erfindungsgemäße Verfahren weist den Vorteil auf, dass durch das Bestimmen eines Soll-Abgastemperatur-Bereichs und nicht einer spezifischen Soll-Abgastemperatur sowie durch das entsprechende Regeln in Abhängigkeit des Soll-Abgastemperatur-Bereichs dieser Zielkonflikt aufgelöst werden kann. Es wird somit die simultane Regelung der Abgastemperatur und des Ladedrucks ermöglicht.

In einer möglichen Ausführungsform des Verfahrens kann der nicht-lineare modelprädiktive Regler einen Ladedruck zu einem oder mehreren nachgelagerten Zeitpunkten in Abhängigkeit der Stellgröße des Bypass-Ventils und der Stellgröße der Abgasklappe vorhersagen.

Der nicht-lineare modelprädiktive Regler kann eine Abgastemperatur zu dem einen oder den mehreren nachgelagerten Zeitpunkten in Abhängigkeit der Stellgröße des Bypass-Ventils und der Stellgröße der Abgasklappe vorhersagen.

Der nicht-lineare modelprädiktive Regler kann eine Gütefunktion minimieren, wobei die Gütefunktion eine Funktion in Abhängigkeit des Unterschiedes zwischen Soll-Ladedruck und vorhergesagtem Ladedruck zu dem einen oder den mehreren nachgelagerten Zeitpunkten und/oder in Abhängigkeit des Unterschiedes zwischen Soll-Abgastemperatur-Bereich und vorhergesagter Abgastemperatur zu dem einen oder den mehreren nachgelagerten Zeitpunkten darstellt. Fällt die vorhergesagte Abgastemperatur in den Soll-Abgastemperatur-Bereich, ist der Unterschied zwischen Soll-Abgastemperatur-Bereich und vorhergesagter Abgastemperatur gleich null. Die Gütefunktion kann auch als Kostenfunktion oder Gütefunktional bezeichnet werden.

In einer weiteren Ausgestaltung des Verfahrens kann der nicht-lineare modelprädiktive Regler einen Ladedruck für einen Prädiktionshorizont in Abhängigkeit der Stellgröße des Bypass-Ventils und der Stellgröße der Abgasklappe vorhersagen. Der nicht-lineare modelprädiktive Regler kann eine Abgastemperatur für einen Prädiktionshorizont in Abhängigkeit der Stellgröße des Bypass-Ventils und der Stellgröße der Abgasklappe vorhersagen. Fällt die vorhergesagte Abgastemperatur in den Soll-Abgastemperatur-Bereich, ist der Unterschied zwischen Soll-Abgastemperatur-Bereich und vorhergesagter Abgastemperatur gleich null. Der Prädiktionshorizont erstreckt sich dabei zeitlich von einem Startzeitpunkt tS bis zu einem Endzeitpunkt tS+T. Der Prädiktionshorizont weist eine Dauer T auf. Als Startzeitpunkt tS kann der Ist-Zeitpunkt t0 gewählt sein. Der Prädiktionshorizont kann die zuvor genannten einen oder die mehreren nachgelagerten Zeitpunkte umfassen.

In dem zuvor genannten Fall kann der nicht-lineare modelprädiktive Regler eine Gütefunktion minimieren, die eine Funktion in Abhängigkeit des Unterschiedes zwischen Soll-Ladedruck und vorhergesagtem Ladedruck in dem Prädiktionshorizont und/oder in Abhängigkeit des Unterschiedes zwischen Soll-Abgastemperatur-Bereich und vorhergesagter Abgastemperatur in dem Prädiktionshorizont darstellen. Die Gütefunktion kann eine Funktion in Abhängigkeit eines Integrals des Unterschiedes zwischen Soll-Ladedruck und vorhergesagtem Ladedruck über den Prädiktionshorizont und/oder in Abhängigkeit eines Integrals des Unterschiedes zwischen Soll-Abgastemperatur-Bereich und vorhergesagter Abgastemperatur über den Prädiktionshorizont darstellten.

In einer möglichen Ausführungsform kann der nicht-lineare modelprädiktive Regler die Gütefunktion unter Berücksichtigung von zumindest einer Nebenbedingung minimieren. Insbesondere kann die zumindest eine Nebenbedingung abhängig von einem von der maximalen Drehzahl eines Abgasturboladers der Brennkraftmaschine, dem maximalen Abgasgegendruck der Brennkraftmaschine, der maximalen Abgastemperatur in dem Abgaskanal der Brennkraftmaschine, der maximalen Abgastemperatur an der Turbine des Abgasturboladers der Brennkraftmaschine, dem minimalen Kraftstoff-Luft-Verhältnis in der Brennkammer der Brennkraftmaschine und der maximalen Stellgröße der Abgasklappe sein.

Die Stellgröße der Abgasklappe kann einen Wert zwischen einer maximalen Betriebsstellgröße, in der die Abgasklappe maximal geschlossen ist, und einer minimalen Betriebsstellgröße, in der die Abgasklappe maximal geöffnet ist, annehmen bzw. auf diesen Wert eingestellt werden.

Die maximale Stellgröße der Abgasklappe kann in Abhängigkeit der vorhergesagten Abgastemperatur bestimmt werden. Dabei kann die maximale Stellgröße der Abgasklappe, wenn die vorhergesagte Abgastemperatur unter dem Soll-Abgastemperatur-Bereich liegt, auf die maximale Betriebsstellgröße gesetzt werden, in der die Abgasklappe maximal geschlossen ist.

Alternativ oder in Kombination kann die maximale Stellgröße der Abgasklappe, wenn die vorhergesagte Abgastemperatur in dem Soll-Abgastemperatur-Bereich oder darüber liegt, auf eine minimale Betriebsstellgröße gesetzt werden, in der die Abgasklappe maximal geöffnet ist. Alternativ kann die maximale Stellgröße der Abgasklappe, wenn die vorhergesagte Abgastemperatur in dem Soll-Abgastemperatur-Bereich oder darüber liegt, auf einen Wert zwischen der maximalen Betriebsstellgröße und der minimale Betriebsstellgröße gesetzt werden, wobei der Wert mit steigendem Unterschied zwischen der vorhergesagten Abgastemperatur und einer Soll-Mindest-Abgastemperatur des Abgastemperatur-Bereichs in Richtung der minimalen Betriebsstellgröße stetig verringert wird.

Die Stellgröße des Bypass-Ventils kann einen Wert zwischen einer minimalen Betriebsstellgröße, in der das Bypass-Ventil maximal geschlossen ist, und einer maximalen Betriebsstellgröße, in der das Bypass-Ventil maximal geöffnet ist, annehmen bzw. auf diesen Wert eingestellt werden.

In einer möglichen Ausführungsform kann zur Bestimmung des Soll-Abgastemperatur-Bereichs eine Soll-Mindest-Abgastemperatur des Abgastemperatur-Bereichs bestimmt werden. Der Soll-Abgastemperatur-Bereich wird dabei von der Soll-Mindest-Abgastemperatur zu kleinen Abgastemperaturwerten begrenzt. Der Abgastemperatur-Bereich kann somit als ein zu großen Abgastemperaturwerten offenes Intervall bezeichnet werden.

Zur Bestimmung der Soll-Mindest-Abgastemperatur des Abgastemperatur-Bereichs kann eine Mindest-Temperatur eines Partikelfilters der Brennkraftmaschine bestimmt werden. Insbesondere kann die Mindest-Temperatur des Partikelfilters in Abhängigkeit einer Ist-Temperatur des Partikelfilters bestimmt werden. Die Ist-Temperatur des Partikelfilters kann mittels eines Temperatursensors bestimmt werden. Alternativ oder in Kombination kann die Mindest-Temperatur des Partikelfilters in Abhängigkeit der Ist-Rußbeladung des Partikelfilters bestimmt werden. Die Ist-Rußbeladung des Partikelfilters kann in der dem Fachmann bekannten Weise gemessen oder bestimmt werden.

Zur Bestimmung der Soll-Mindest-Abgastemperatur des Abgastemperatur-Bereichs kann eine Mindest-Temperatur eines SCR-Katalysators der Brennkraftmaschine bestimmt werden. Die Mindest-Temperatur des SCR-Katalysators der Brennkraftmaschine kann insbesondere in Abhängigkeit der Ammoniakbeladung des SCR-Katalysators bestimmt werden. Die Ammoniakbeladung des SCR-Katalysators kann in der dem Fachmann bekannten Weise gemessen oder bestimmt werden.

Zur Bestimmung der Soll-Mindest-Abgastemperatur des Abgastemperatur-Bereichs kann eine Maximal-Temperatur des SCR-Katalysators der Brennkraftmaschine bestimmt werden. Die Maximal-Temperatur des SCR-Katalysators der Brennkraftmaschine kann insbesondere in Abhängigkeit einer Ist-Temperatur des SCR-Katalysators und/oder eines maximalen zeitlichen Temperaturgradienten des SCR-Katalysators bestimmt werden. Durch die Beschränkung des Temperaturgradienten des SCR-Katalysators auf einen maximalen Wert kann Ammoniakschlupf vermieden werden. Die Temperatur des SCR-Katalysators kann mittels eines Temperatursensors bestimmt werden.

Zur Bestimmung der Soll-Mindest-Abgastemperatur des Abgastemperatur-Bereichs kann eine Mindest-Temperatur eines SCR-Dosiersystems der Brennkraftmaschine bestimmt werden. Die Mindest-Temperatur eines SCR-Dosiersystems der Brennkraftmaschine kann insbesondere in Abhängigkeit eines geforderten Reduktionsmittelmassenstroms des SCR-Dosiersystems bestimmt werden. Der geforderte Reduktionsmittelmassenstroms des SCR-Dosiersystems kann auch als Soll-Reduktionsmittelmassenstrom bezeichnet werden.

Zur Bestimmung der Soll-Mindest-Abgastemperatur des Abgastemperatur-Bereichs kann ein Vergleichswert aus dem Maximalwert von der Mindest-Temperatur des Partikelfilters der Brennkraftmaschine, der Mindest-Temperatur des SCR-Katalysators der Brennkraftmaschine und der Mindest-Temperatur des SCR-Dosiersystems der Brennkraftmaschine bestimmt werden. Optional kann die Soll-Mindest-Abgastemperatur des Abgastemperatur-Bereichs auf den Minimalwert aus dem Vergleichswert und der Maximal-Temperatur des SCR-Katalysators der Brennkraftmaschine festgesetzt werden.

Nachfolgend wird anhand der Figurenzeichnungen eine Ausgestaltung einer erfindungsgemäßen Brennkraftmaschine und eine Ausgestaltung eines erfindungsgemäßen Verfahrens zur simultanen Regelung der Abgastemperatur und des Ladedrucks einer Brennkraftmaschine erörtert. Hierin zeigt:
- Figur 1: eine schematische Darstellung einer erfindungsgemäßen Brennkraftmaschine;
- Figur 2: eine Darstellung eines erfindungsgemäßen Verfahrens zur simultanen Regelung der Abgastemperatur und des Ladedrucks der Brennkraftmaschine gemäß Figur 1;
- Figur 3: eine graphische Darstellung der Bestimmung der maximale Stellgröße ζ_AK_max der Abgasklappe; und
- Figur 4: eine graphische Darstellung eines Regelkreises, der in der Brennkraftmaschine gemäß Figur 1 realisiert ist.

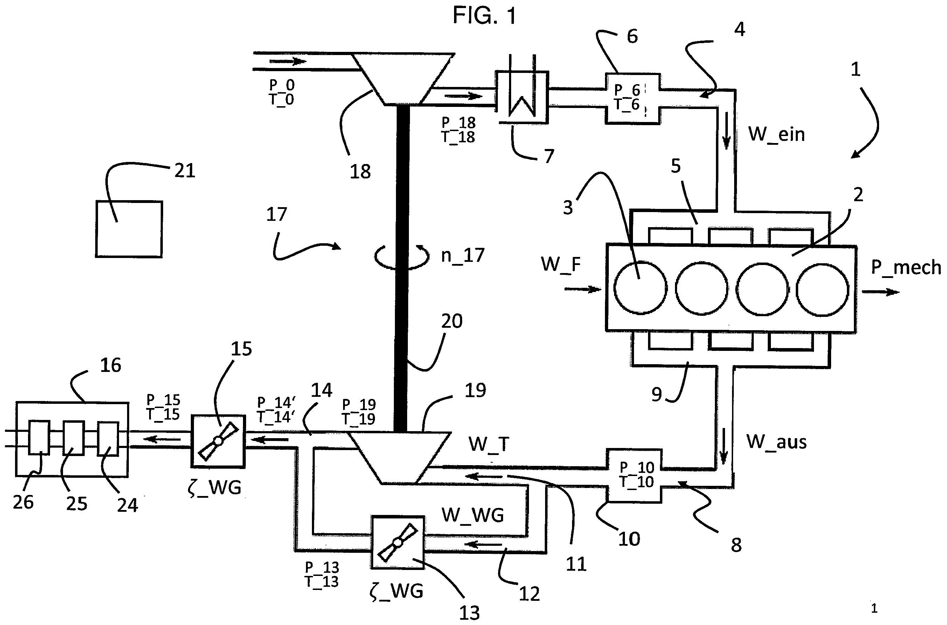

In Figur 1 wird eine erfindungsgemäße Brennkraftmaschine 1 gezeigt, in der ein Kraftstoffmassenstrom W_F in mechanische Leistung P_mech gewandelt wird. Hierzu umfasst ein Kurbelgehäuse 2 der Brennkraftmaschine 1 mehrere Brennkammern 3, in denen der Kraftstoff in bekannter Weise verbrannt wird. Im vorliegenden Fall weist die Brennkraftmaschine 1 vier Brennkammern 3 auf.

Die Brennkraftmaschine 1 umfasst einen Saugkanal 4, über den einzelnen Brennkammern 3 Frischluft für die Verbrennung des Kraftstoffs zugeführt wird. Der Saugkanal 4 gabelt sich im Bereich eines Ansaugkrümmers 5 von einem zentralen Kanal in vier einzelne Fluten auf, die jeweils mit einer Brennkammer 3 verbunden sind.

In dem Saugkanal 4 ist ein Verdichter 18 eines Abgasturboladers 17 angeordnet. Über den Verdichter 18 wird Ladeluft aus der Umgebung mit Atmosphärendruck P_0 und Umgebungstemperatur T_0 angesaugt und verdichtet. Der Atmosphärendruck P_0 wird über einen Atmosphärendrucksensor und die Umgebungstemperatur T_0 über einen Umgebungstemperatursensor gemessen. Unmittelbar hinter dem Verdichter 18 nimmt der Druck der Ladeluft den Wert P_18 und die Temperatur der Ladeluft den Wert T_18 an.

In dem Saugkanal 4 ist zudem stromabwärts vom Verdichter 18 ein Ladeluftkühler 7 angeordnet, mittels dessen die Ladeluft in bekannter Weise gekühlt werden kann.

Im Bereich unmittelbar vor dem Ansaugkrümmer 5 weist der Saugkanal 4 eine Messstelle 6 auf, an der der Ladedruck P_6 mittels eines Ladedrucksensors und die Ladelufttemperatur T_6 mittels eines Ladelufttemperatursensors ermittelt werden. Dem Ansaugkrümmer 5 wird ein Frischluftmassenstrom W_ein zugeführt.

Die Brennkammer 1 umfasst zudem einen Abgaskanal 8, über den der durch die Verbrennung von Kraftstoff in der Brennkammer 3 entstandene Abgasmassenstrom W_aus abgegeben werden kann. In dem Abgaskanal 8 ist ein Abgaskrümmer 9 vorgesehen, in dem einzelne Fluten, die jeweils mit einer Brennkammer 3 verbunden sind, zu einem zentralen Kanal zusammengeführt werden.

In dem Bereich unmittelbar hinter dem Abgaskrümmer 9 weist der Abgaskanal 8 in dem zentralen Kanal eine Messstelle 10 auf, an der der Abgasdruck P_10 mittels eines ersten Abgasdrucksensors und die Abgastemperatur T_10 mittels eines ersten Abgastemperatursensors ermittelt werden. Der Abgasdruck P_10 kann auch als Abgasgegendruck bezeichnet werden. Alternativ kann die Abgastemperatur T_10 mittels eines Zustandsbeobachters indirekt über weitere Messwerte ermittelt werden.

Stromabwärts der Messstelle 10 gabelt sich der Abgaskanal 8 in einen Turbinenkanal 11 und einen Bypass-Kanal 12 auf. Der Abgasmassenstrom W_aus wird dementsprechend auf den Turbinenkanal 11 und den Bypass-Kanal 12 aufgeteilt, wobei durch den Turbinenkanal 11 ein Abgasmassenstrom W_T und durch den Bypass-Kanal 12 ein Abgasmassenstrom W_WG hindurchströmen.

In dem Turbinenkanal 11 ist eine Turbine 19 des Abgasturboladers 17 angeordnet. Die Turbine 19 ist über eine Welle 20 mit dem Verdichter 18 verbunden. Die Turbine 19 entnimmt in bekannter Weise dem Abgasmassenstrom W_aus Energie, um den Verdichter 18 über die Welle 20 anzutreiben. Die Drehzahl n_17 der Welle 20 kann über einen Zustandsbeobachter simuliert werden oder mittels eines Drehzahlsensors gemessen werden.

Unmittelbar hinter der Turbine 19 nimmt der Druck des durch den Turbinenkanal 11 strömenden Abgasmassenstromes W_T den Wert P_19 und die Temperatur des durch den Turbinenkanal 11 strömenden Abgasmassenstromes W_T den Wert T_19 an.

In dem Bypass-Kanal 12 ist ein Bypass-Ventil 13 angeordnet. Das Bypass-Ventil 13 kann auch als Wastegate bezeichnet werden. Das Bypass-Ventil 13 kann stufenlos zwischen einer Schließposition, in der das Bypass-Ventil 13 maximal geschlossen ist und die auch als minimale Betriebsstellgröße bezeichnet werden kann, und einer Öffnenposition, in der das Bypass-Ventil 13 maximal geöffnet ist und die auch als maximale Betriebsstellgröße bezeichnet werden kann, verstellt werden. Die jeweilige Stellgröße des Bypass-Ventils 13 wird als Bypass-Ventil-Position ζ_WG bezeichnet. Durch Öffnen respektive Schließen des Bypass-Ventils 13 kann der durch den Bypass-Kanal 12 strömende Abgasmassenstrom W_WG eingestellt werden. Mit anderen Worten kann durch Öffnen respektive Schließen des Bypass-Ventils 13 der Anteil des Abgasmassenstromes W_aus, der durch den Bypass-Kanal 12 strömt, eingestellt werden. Die Bypass-Ventil-Position ζ_WG wird durch einen Bypass-Ventil-Positionssensor, beispielsweise einen Drehwinkelsensor, gemessen.

Unmittelbar hinter dem Bypass-Ventil 13 nimmt der Druck des durch den Bypass-Kanal 12 strömenden Abgasmassenstromes W_WG den Wert P_13 und die Temperatur des durch den Bypass-Kanal 12 strömenden Abgasmassenstromes W_WG den Wert T_13 an.

Stromabwärts der Turbine 19 und stromabwärts des Bypass-Ventils 13 werden der Turbinenkanal 11 und der Bypass-Kanal 12 in einer Sammelstelle 14 zusammengeführt. Stromabwärts der Sammelstelle 14 ist in dem Abgaskanal 8 eine Abgasklappe 15 angeordnet. Die Abgasklappe 15 kann stufenlos zwischen einer Schließposition, in der die Abgasklappe 15 maximal geschlossen ist und die auch als maximale Betriebsstellgröße bezeichnet werden kann, und einer Öffnenposition, in der die Abgasklappe 15 maximal geöffnet ist und die auch als minimale Betriebsstellgröße bezeichnet werden kann, verstellt werden. Die jeweilige Stellgröße der Abgasklappe 15 wird als Abgasklappen-Position ζ_AK bezeichnet. Die Abgasklappen-Position ζ_AK wird durch einen Abgasklappen-Positionssensor, beispielsweise einen Drehwinkelsensor, gemessen.

Der Abgasmassenstrom weist in dem Bereich unmittelbar vor (stromaufwärts) der Abgasklappe 15 einen Druck mit dem Wert P_15' auf, der durch einen zweiten Abgasdrucksensor ermittelt oder durch eine Zustandsbeobachter simuliert wird, und eine Temperatur mit dem Wert T_15`, die durch einen zweiten Abgastemperatursensor ermittelt wird.

Der Abgasmassenstrom weist in dem Bereich unmittelbar hinter (stromabwärts) der Abgasklappe 15 einen Druck mit dem Wert P_15 auf, der durch einen dritten Abgasdrucksensor ermittelt wird oder durch eine Zustandsbeobachter simuliert wird, und eine Temperatur mit dem Wert T_15, die durch einen dritten Abgastemperatursensor ermittelt wird.

Der zweite Abgasdrucksensor und der dritte Abgasdrucksensor können in Kombination oder als Alternative verwendet werden. Der zweite Abgastemperatursensor und der dritte Abgastemperatursensor können in Kombination oder als Alternative verwendet werden.

Im vorliegenden Fall ist eine Abgasnachbehandlungsanordnung 16 stromabwärts der Abgasklappe 15 angeordnet. Die Abgasnachbehandlungsanordnung 16 umfasst einen Partikelfilter 24, der den Abgasmassenstrom in bekannter Weise von Partikeln, insbesondere Rußpartikeln, reinigt. Die Temperatur T_24 des Partikelfilters 24 wird durch einen Partikelfiltertemperatursensor gemessen oder durch ein geeignetes Temperaturmodell simuliert.

Die Abgasnachbehandlungsanordnung 16 umfasst zudem einen SCR-Katalysator 26, der in bekannter Weise durch selektive katalytische Reduktion den Abgasmassenstrom von Stickoxiden bereinigt. Die Temperatur T_26 des SCR-Katalysators 26 wird durch einen Katalysatortemperatursensor gemessen oder durch ein geeignetes Temperaturmodell simuliert.

Zwischen dem Partikelfilter 24 und dem SCR-Katalysator 26 ist ein SCR-Dosiersystem 25 angeordnet, mittels dessen Ammoniak, beispielsweise in Form von Harnstoff, in den Abgaskanal 8 respektive in den SCR-Katalysator 26 eindosiert werden kann. Die Temperatur T_25 des SCR-Dosiersystems 25 wird durch einen Dosiersystemtemperatursensor gemessen oder durch ein geeignetes Temperaturmodell simuliert.

Die Brennkraftmaschine 1 umfasst eine Steuereinheit 21, die auch als Computer bezeichnet werden kann, mittels derer die Brennkraftmaschine 1 steuerbar ist. Die Steuereinheit 21 ist dazu ausgestaltet, einen Zustandsvektor *x̂* der Brennkraftmaschine 1 zu erfassen. Der Zustandsvektor *x̂* kann beispielweise einen oder mehrere Werte von der Leistungsanforderung der Brennkraftmaschine, dem Kraftstoffmassenfluss, der Kurbelwellendrehzahl n_mot, der Abgasturboladerdrehzahl n_17, der Bypass-Ventil-Position ζ_WG, der Abgasklappen-Position ζ_AK, dem Kraftstoff-Luft-Verhältnis λ, dem Umgebungsdruck P_0, der Umgebungstemperatur T_0, dem Druck der Ladeluft P_18, dem Ladedruck P_6, dem Abgasdruck P_10, der Temperatur der Ladeluft T_18, der Ladelufttemperatur T_6, der Abgastemperatur T_10, der Temperatur T_19 des durch den Turbinenkanal 11 strömenden Abgasmassenstromes, der Temperatur T_13 des durch den Bypass-Kanal 12 strömenden Abgasmassenstromes, der Partikelfiltertemperatur T_24, dem zeitlichen Verlauf des Rußmassenstroms in dem Partikelfilter 24, der Partikelbeladung des Partikelfilters 24 und der Stickoxidbeladung des SCR_Katalysators 26 umfassen.

Die Steuereinheit 21 kann derart ausgestaltet sein, dass ein oder mehrere Werte des Zustandsvektors *x̂* in Abhängigkeit weiterer Werte des Zustandsvektors *x̂* anhand von Zustandsbeobachtern simuliert werden können. Die Steuereinheit 21 ist darüber hinaus dazu ausgeschaltet, die Abgastemperatur T_15 und den Ladedruck P_6 simultan zu regeln. Die Steuereinheit 21 ist ferner dazu ausgeschaltet, die Bypass-Ventil-Position ζ_WG und die Abgasklappen-Position ζ_AK zu stellen.

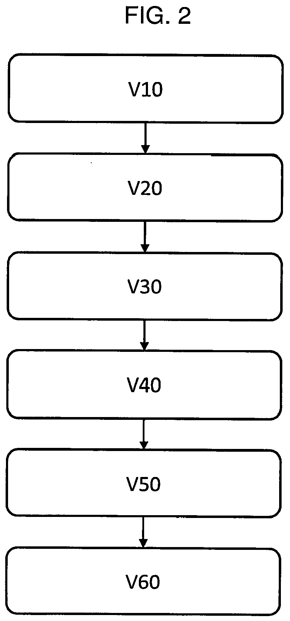

In Figur 2 wird eine Ausgestaltung eines erfindungsgemäßen Verfahrens zur simultanen Regelung der Abgastemperatur und des Ladedrucks einer Brennkraftmaschine anhand eines Flussdiagrammes dargestellt. Im vorliegenden Fall wird das Verfahren für die zuvor beschriebene Brennkraftmaschine erläutert.

In einem Verfahrensschritt V10 wird der Ist-Ladedruck P_6_Ist zu dem Ist-Zeitpunkt t0 ermittelt. Der Ist-Ladedruck P_6_lst wird dabei von dem Ladedrucksensor gemessen. Alternativ kann der Ist-Ladedruck P_6_Ist in Abhängigkeit der Ist-Abgasturboladerdrehzahl n_17_ist über einen Zustandsbeobachter ermittelt werden.

In einem weiteren Verfahrensschritt V20 wird die Ist-Abgastemperatur zu dem Ist-Zeitpunkt t0 ermittelt. Die Ist-Abgastemperatur wird im vorliegenden Fall hinter der Abgasklappe 15 und vor der Abgasnachbehandlungsanordnung 16 durch den dritten Abgastemperatursensor ermittelt. In diesem Fall entspricht die Ist-Abgastemperatur somit mit dem Wert T_15_Ist. Alternativ kann die Ist-Abgastemperatur unmittelbar vor der Abgasklappe 15 durch den zweiten Abgastemperatursensor ermittelt werden. In diesem Fall entspricht die Ist-Abgastemperatur somit dem Wert T_15'_lst.

In einem weiteren Verfahrensschritt V30 wird ein Soll-Ladedruck P_6_Soll zu einem dem Ist-Zeitpunkt t0 nachgelagerten Zeitpunkt t0+T bestimmt. Der Ist-Zeitpunkt t0 und der nachgelagerte Zeitpunkt t0+T begrenzen einen Prädiktionshorizont mit der Dauer T. Der Soll-Ladedruck P_6_Sollwird für den gesamten Prädiktionshorizont bestimmt. Dies kann in Abhängigkeit der Kurbelwellendrehzahl n_mot und/oder des Kraftstoffmassenflusses W_F erfolgen.

In einem weiteren Verfahrensschritt V40 wird ein Soll-Bereich der Abgastemperatur T_15 (respektive der Abgastemperatur T15') für den Prädiktionshorizont bestimmt, der auch als Soll-Abgastemperatur-Bereich bezeichnet werden kann. Hierzu wird eine Soll-Mindest-Abgastemperatur T_15_min des Abgastemperatur-Bereichs bestimmt.

Zur Bestimmung der Soll-Mindest-Abgastemperatur T_15_min des Soll-Abgastemperatur-Bereichs wird eine Mindest-Temperatur T_24_min des Partikelfilters 24 in Abhängigkeit der Ist-Rußbeladung des Partikelfilters 24 zum Ist-Zeitpunkt t0 und/oder der Ist-Temperatur T_24_ist des Partikelfilters 24 zum Ist-Zeitpunkt t0 bestimmt.

Zur Bestimmung der Soll-Mindest-Abgastemperatur T_15_min des Soll-Abgastemperatur-Bereichs wird zudem eine Mindest-Temperatur T_26_min des SCR-Katalysators 26 in Abhängigkeit der Ist-Ammoniakbeladung des SCR-Katalysators 26 zum Ist-Zeitpunkt t0 bestimmt.

Zur Bestimmung der Soll-Mindest-Abgastemperatur T_15_min des Soll-Abgastemperatur-Bereichs wird zudem eine Maximal-Temperatur T_26_max des SCR-Katalysators 26 in Abhängigkeit der Ist-Temperatur T_26_lst zum Ist-Zeitpunkt t0 und eines maximal zulässigen Temperaturgradienten dT26_max des SCR-Katalysators 26 bestimmt. Der Temperaturgradienten dT26_max beschreibt dabei die zeitliche Änderung einer mittleren Temperatur T_26_mean des SCR-Katalysators 26.

Zur Bestimmung der Soll-Mindest-Abgastemperatur T_15_min des Soll-Abgastemperatur-Bereichs wird zudem eine Mindest-Temperatur T_25_min des SCR-Dosiersystems 25 bestimmt. Dies erfolgt in Abhängigkeit eines Soll-Reduktionsmittelmassenstroms des SCR-Dosiersystems 25 für den Prädiktionshorizont.

Zur Bestimmung der Soll-Mindest-Abgastemperatur T_15_min des Soll-Abgastemperatur-Bereichs wird ein Vergleichswert aus dem Maximalwert der Mindest-Temperatur T_24_min des Partikelfilters 24, der Mindest-Temperatur T 26_min des SCR-Katalysators 26, und der Mindest-Temperatur T_25_min des SCR-Dosiersystems 25 bestimmt.

Optional kann die Soll-Mindest-Abgastemperatur T_15_min des Abgastemperatur-Bereichs auf den Minimalwert aus dem Vergleichswert und der Maximal-Temperatur T_26_max des SCR-Katalysators 26 festgesetzt werden.

In einem weiteren Verfahrensschritt V50 wird die Stellgröße <_WG des Bypass-Ventils 13 und die Stellgröße ζ_AK der Abgasklappe simultan bestimmt. Dies erfolgt mittels eines nicht-linearen modelprädiktiven Reglers in Abhängigkeit des Ist-Ladedrucks P 6_Ist, der Ist-Abgastemperatur T _15_lst, des Soll-Ladedrucks P 6_Soll und des Soll-Abgastemperatur-Bereichs.

Der nicht-lineare modelprädiktive Regler simuliert den Ladedruck P_6_pred zu einem oder mehreren nachgelagerten Zeitpunkten in dem Prädiktionshorizont in Abhängigkeit der Stellgröße des Bypass-Ventils ζ_WG und der Stellgröße der Abgasklappe ζ_AK. Der nicht-lineare modelprädiktive Regler simuliert die Abgastemperatur T_15_pred zu einem oder mehreren nachgelagerten Zeitpunkten in dem Prädiktionshorizont in Abhängigkeit der Stellgröße ζ_WG des Bypass-Ventils 13 und der Stellgröße ζ_AK der Abgasklappe 15.

Der nicht-lineare modelprädiktive Regler minimiert eine Gütefunktion, wobei die Gütefunktion eine Funktion in Abhängigkeit des Unterschiedes zwischen Soll-Ladedruck P 6_Soll und vorhergesagtem Ladedruck P_6_pred zu dem einen oder den mehreren nachgelagerten Zeitpunkten ist. Die Gütefunktion ist zudem eine Funktion in Abhängigkeit des Unterschiedes zwischen Soll-Abgastemperatur-Bereich und vorhergesagter Abgastemperatur T_15_pred zu dem einen oder den mehreren nachgelagerten Zeitpunkten. Der Unterschied zwischen Soll-Abgastemperatur-Bereich und vorhergesagter Abgastemperatur T_15_pred wird zu null gesetzt, wenn die vorhergesagte Abgastemperatur T_15_pred in dem Soll-Abgastemperatur-Bereich liegt.

Der nicht-lineare modelprädiktive Regler minimiert die Gütefunktion unter Berücksichtigung der nachfolgenden Nebenbedingungen.

Die Drehzahl n_17 des Abgasturboladers 17 darf die maximale Drehzahl n_17_max des Abgasturboladers 17 nicht überschreiten.

Der Abgasdruck P_10 darf den maximalen Abgasgegendruck P_10_max nicht überschreiten.

Die Abgastemperaturen T_10 an der Messstelle 10 darf die maximale Abgastemperatur T_10_max in dem Abgaskanal 8 nicht überschreiten.

Die Abgastemperatur T_19 unmittelbar hinter der Turbine 19 des Abgasturboladers 17 darf eine maximale Abgastemperatur T_19_max an der Turbine 19 des Abgasturboladers 17 nicht überschreiten.

Das Kraftstoff-Luft-Verhältnis λ in der Brennkammer 3 darf das minimale Kraftstoff-Luft-Verhältnis λ_min nicht unterschreiten.

Die Stellgröße ζ_AK der Abgasklappe 15 darf eine maximale Stellgröße ζ_AK_max nicht überschreiten. Die maximale Stellgröße ζ_AK_max der Abgasklappe 15 wird in Abhängigkeit der vorhergesagten Abgastemperatur T_15_pred bestimmt. Dabei wird die maximale Stellgröße ζ_AK_max der Abgasklappe 15 auf eine maximale Betriebsstellgröße ζ_AK_1 gesetzt, in der die Abgasklappe 15 maximal geschlossen ist, wenn die vorhergesagte Abgastemperatur T_15_pred unter dem Soll-Abgastemperatur-Bereich liegt.

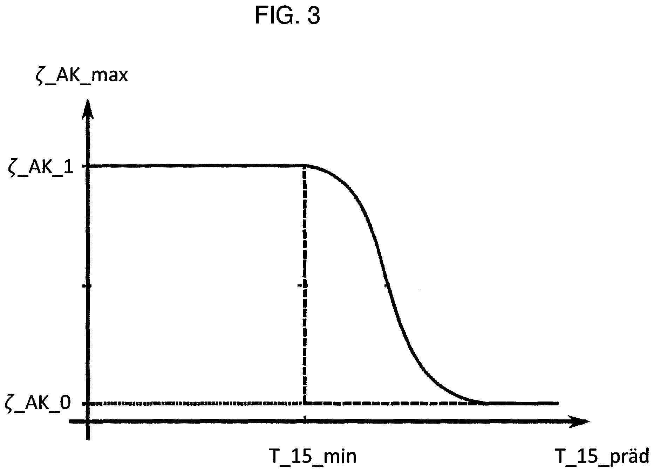

Zudem wird die maximale Stellgröße ζ_AK_max der Abgasklappe 15 auf eine minimale Betriebsstellgröße ζ_AK_0 gesetzt, in der die Abgasklappe maximal geöffnet ist, wenn die vorhergesagte Abgastemperatur in dem Soll-Abgastemperatur-Bereich oder darüber liegt, wie in Figur 3 anhand der gestrichelten Linie dargestellt. Alternativ, wie in Figur 3 anhand der durchgezogenen Linie dargestellt, kann die maximale Stellgröße ζ_AK_max der Abgasklappe 15 auf einen Wert zwischen der maximalen Betriebsstellgröße ζ_AK_1 und der minimale Betriebsstellgröße ζ_AK_0 gesetzt werden, wenn die vorhergesagte Abgastemperatur in dem Soll-Abgastemperatur-Bereich oder darüber liegt. Dabei wird der Wert mit steigendem Unterschied zwischen der vorhergesagten Abgastemperatur T_15_pred und der Soll-Mindest-Abgastemperatur T_15_min in Richtung der minimalen Betriebsstellgröße stetig verringert.

In einem weiteren Verfahrensschritt V60 wird die Stellgröße ζ_WG des Bypass-Ventils 13 über einen ersten Aktuator und die Stellgröße ζ_AK der Abgasklappe 15 über einen zweiten Aktuator eingestellt.

Das erfindungsgemäße Verfahren ist auf der Steuereinheit 21 implementiert.

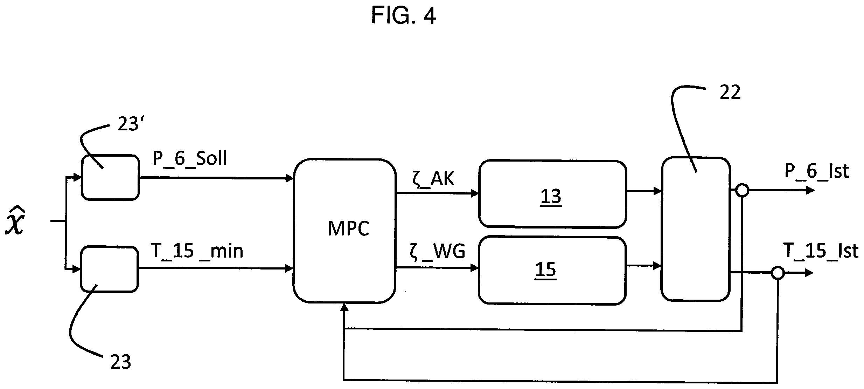

In Figur 4 wird das Verfahren vereinfacht anhand eines Regelkreises beschrieben. Aus dem Zustandsvektor *x̂* der Brennkraftmaschine 1 wird anhand der zuvor beschriebenen Ermittlung 23 des Soll-Abgastemperatur-Bereichs die Soll-Mindest-Abgastemperatur T_15_min bestimmt und an den modellprädiktiven Regler MPC übergeben. Aus dem Zustandsvektor *x̂* der Brennkraftmaschine 1 wird zudem anhand der zuvor beschriebenen Ermittlung 23' des Soll-Ladedrucks P 6_Soll der Soll-Ladedrucks P_6_Sollbe-stimmt und an den modellprädiktiven Regler übergeben.

Der Ist-Ladedruck P_6_ist und die Ist-Abgastemperatur T_15_Ist werden ermittelt und an den modellprädiktiven Regler MPC übergeben. Der modellprädiktive Regler MPC bestimmt in Abhängigkeit des Ist-Ladedrucks P_6_ist, der Ist-Abgastemperatur T_15_Ist, des Soll-Ladedrucks P_6_Soll und dem Soll-Abgastemperatur-Bereich mit der Soll-Mindest-Abgastemperatur T_15_min simultan die Stellgröße ζ_WG des Bypass-Ventils 13 und die Stellgröße ζ_AK der Abgasklappe 15.

Über die Regelstrecke 22 ergeben sich für einen nachgelagerten Zeitpunkt wiederum neue Werte für den Ladedruck P_6 und die Abgastemperatur T_15.

### Bezugszeichenliste

- 1: Brennkraftmaschine
- 2: Kurbelgehäuse
- 3: Brennkammern
- 4: Saugkanal
- 5: Ansaugkrümmer
- 6: Messstelle
- 7: Ladeluftkühler
- 8: Abgaskanal
- 9: Abgaskrümmer
- 10: Messstelle
- 11: Turbinenkanal
- 12: Bypass-Kanal
- 13: Bypass-Ventil
- 14: Sammelstelle
- 15: Abgasklappe
- 16: Abgasnachbehandlungsanordnung
- 17: Abgasturbolader
- 18: Verdichter
- 19: Turbine
- 20: Welle
- 21: Steuereinheit
- 22: Regelstrecke
- 23: Ermittlung
- 23: Ermittlung
- 24: Partikelfilter
- 25: SCR-Dosiersystem
- 26: SCR-Katalysator
- T_: Temperatur
- P_: Druck
- *x̂*: Zustandsvektor der Brennkraftmaschine

## Patentansprüche

1. Brennkraftmaschine umfassend:
einen Abgasturbolader (17) mit einer Turbine (19), die in einem Abgaskanal (8) angeordnet ist, und mit einem Verdichter (18), der in einem Saugkanal (4) angeordnet ist;
ein Bypass-Ventil (13), über das zumindest ein Teil eines Abgasmassenstroms der Brennkraftmaschine an der Turbine (19) vorbeiführbar ist,
und eine Abgasklappe (15), die stromabwärts von der Turbine (19) und dem Bypass-Ventil (13) in dem Abgaskanal (8) angeordnet ist.

2. Brennkraftmaschine nach Anspruch 1,
**dadurch gekennzeichnet, dass** der Abgaskanal (8) eine Abgasnachbehandlungsanordnung (16) umfasst, insbesondere mit einem Partikelfilter (24) und einem SCR-Katalysator (26).

3. Brennkraftmaschine nach Anspruch 2,
**dadurch gekennzeichnet, dass** der Saugkanal (4) und der Abgaskanal (8) nur über Brennkammern (3) der Brennkraftmaschine (1) fluidisch miteinander verbunden sind.

4. Verfahren zur simultanen Regelung der Abgastemperatur und des Ladedrucks einer Brennkraftmaschine, insbesondere einer Brennkraftmaschine nach einem der vorhergehenden Ansprüche, die folgenden Schritte umfassend:
(V10) Ermitteln eines Ist-Ladedrucks (P 6_Ist);
(V20) Ermitteln einer Ist-Abgastemperatur (T_15_Ist);
(V30) Bestimmen eines Soll-Ladedrucks (P_6_Soll);
(V40) Bestimmen eines Soll-Abgastemperatur-Bereichs;
(V50) simultanes Bestimmen einer Stellgröße (ζ_WG) eines Bypass-Ventils (13), über das zumindest ein Teil des Abgasmassenstroms der Brennkraftmaschine (1) an einer Turbine (19) eines Abgasturboladers (17) vorbeiführbar ist, und einer Stellgröße (ζ_AK) einer Abgasklappe (15) mittels eines nicht-linearen modelprädiktiven Reglers (MPC) in Abhängigkeit des Ist-Ladedrucks (P 6_Ist), der Ist-Abgastemperatur (T_15_Ist), des Soll-Ladedrucks (P 6_Soll) und des Soll-Abgastemperatur-Bereichs; und
(V60) Einstellen der Stellgröße (ζ_WG) des Bypass-Ventils (13) und der Stellgröße (ζ_AK) der Abgasklappe (15).

5. Verfahren nach Anspruch 4,
**dadurch gekennzeichnet,**
**dass** der nicht-lineare modelprädiktive Regler (MPC) einen Ladedruck (P_6_präd) zu einem nachgelagerten Zeitpunkt in Abhängigkeit der Stellgröße (ζ_WG) des Bypass-Ventils (13) und der Stellgröße (ζ_AK) der Abgasklappe (15) vorhersagt,
**dass** der nicht-lineare modelprädiktive Regler (MPC) eine Abgastemperatur (T_15_pred) zu einem nachgelagerten Zeitpunkt in Abhängigkeit der Stellgröße (ζ_WG) des Bypass-Ventils (13) und der Stellgröße (ζ_AK) der Abgasklappe (15) vorhersagt,
**dass** der nicht-lineare modelprädiktive Regler (MPC) eine Gütefunktion minimiert,
wobei die Gütefunktion eine Funktion
in Abhängigkeit des Unterschiedes zwischen Soll-Ladedruck (P 6_Soll) und vorhergesagtem Ladedruck (P_6_pred) zu dem nachgelagerten Zeitpunkt
sowie
in Abhängigkeit des Unterschiedes zwischen Soll-Abgastemperatur-Bereich und vorhergesagter Abgastemperatur (T_15_pred) zu dem nachgelagerten Zeitpunkt darstellt.

6. Verfahren nach Anspruch 5,
**dadurch gekennzeichnet,**
**dass** der nicht-lineare modelprädiktive Regler (MPC) die Gütefunktion unter Berücksichtigung von zumindest einer Nebenbedingung minimiert, wobei die zumindest eine Nebenbedingung insbesondere abhängig von einem von
der maximalen Drehzahl (n_17_max) eines Abgasturboladers (17) der Brennkraftmaschine (1),
dem maximalen Abgasdruck (P_10_max) der Brennkraftmaschine (1),
der maximalen Abgastemperatur (T_10_max) in dem Abgaskanal (8) der Brennkraftmaschine (1),
der maximalen Abgastemperatur (T_19_max) an der Turbine (19) des Abgasturboladers (17) der Brennkraftmaschine (1),
dem minimalen Kraftstoff-Luft-Verhältnis A_min in der Brennkammer (3) der Brennkraftmaschine (1), und
der maximalen Stellgröße (ζ_AK_max) der Abgasklappe (15) ist.

7. Verfahren nach Anspruch 6,
**dadurch gekennzeichnet,**
**dass** die maximale Stellgröße (ζ_AK_max) der Abgasklappe (15) in Abhängigkeit der vorhergesagten Abgastemperatur (T_15_pred) bestimmt wird,
wobei die maximale Stellgröße (ζ_AK_max) der Abgasklappe (15), wenn die vorhergesagte Abgastemperatur (T_15_pred) unter dem Soll-Abgastemperatur-Bereich liegt, auf eine maximale Betriebsstellgröße (ζ_AK_1) gesetzt wird, in der die Abgasklappe (15) maximal geschlossen ist,
und die maximale Stellgröße (ζ AK_max) der Abgasklappe (15), wenn die vorhergesagte Abgastemperatur (T_15_pred) in dem Soll-Abgastemperatur-Bereich oder darüber liegt, auf eine minimale Betriebsstellgröße (<_AK_0) gesetzt oder stetig verringert wird, in der die Abgasklappe (15) maximal geöffnet ist.

8. Verfahren nach einem der Ansprüche 4 bis 7,
**dadurch gekennzeichnet, dass** der Soll-Abgastemperatur-Bereich dadurch bestimmt wird, dass eine Soll-Mindest-Abgastemperatur (T_15_min) des Soll-Abgastemperatur-Bereichs bestimmt wird.

9. Verfahren nach Anspruch 8,
**dadurch gekennzeichnet,**
**dass** zur Bestimmung der Soll-Mindest-Abgastemperatur (T_15_min) des Abgastemperatur-Bereichs
eine Mindest-Temperatur (T_24_min) eines Partikelfilters (24) der Brennkraftmaschine, insbesondere in Abhängigkeit einer Ist-Temperatur des Partikelfilters (24) und/oder der Ist-Rußbeladung des Partikelfilters (24), bestimmt wird; und
eine Mindest-Temperatur (T_26_min) eines SCR-Katalysators (26) der Brennkraftmaschine (1), insbesondere in Abhängigkeit der Ammoniakbeladung des SCR-Katalysators (26), bestimmt wird;
eine Maximal-Temperatur (T_26_max) des SCR-Katalysators (26) der Brennkraftmaschine (1), insbesondere in Abhängigkeit eines maximalen Temperaturgradienten (dT26_max) des SCR-Katalysators (26), bestimmt wird;
und
eine Mindest-Temperatur (T_25_min) eines SCR-Dosiersystems (25) der Brennkraftmaschine (1), insbesondere in Abhängigkeit eines geforderten Reduktionsmittelmassenstroms des SCR-Dosiersystems (25), bestimmt wird.

10. Verfahren nach Anspruch 9,
**dadurch gekennzeichnet,**
**dass** zur Bestimmung der Soll-Mindest-Abgastemperatur (T_15_min) des Soll-Abgastemperatur-Bereichs ein Vergleichswert aus dem Maximalwert von
der Mindest-Temperatur (T_24_min) des Partikelfilters (24) der Brennkraftmaschine (1),
der Mindest-Temperatur (T_26_min) des SCR-Katalysators (26) der Brennkraftmaschine, und
der Mindest-Temperatur (T_25_min) des SCR-Dosiersystems (25) der Brennkraftmaschine (1), bestimmt wird, und optional
die Soll-Mindest-Abgastemperatur (T_15_min) des Abgastemperatur-Bereichs auf den Minimalwert aus dem Vergleichswert und der Maximal-Temperatur des SCR-Katalysators (26) der Brennkraftmaschine festgesetzt wird.
